# FASCICULE DE BREVET EUROPEEN

(11) **EP 1 176 336 B1**
(45) Date de publication et mention de la délivrance du brevet: **02.05.2003**
(21) Numéro de dépôt: 01401970.7
(22) Date de dépôt: 23.07.2001
(51) Int. Cl.: F16F 13/26

(54) **Support antivibratoire hydraulique à commande pneumatique et véhicule automobile comportant un tel support**
Hydraulisches, schwingungsdämpfendes Lager und Kraftfahrzeug, welches mit einem solchen Lager ausgerüstet ist
Hydraulic antivibration support and motor vehicle comprising said support

(30) Priorité: 27.07.2000 FR 0009858
(43) Date de publication de la demande: 30.01.2002
(73) Titulaire: HUTCHINSON, 75008 Paris (FR)
(72) Inventeur: Oberle, Alexandre, 28200 Chateaudun (FR)
(74) Mandataire: Burbaud, Eric

(56) Documents cités:
- EP-A- 0 440 260
- FR-A- 2 782 764

## Description

La présente invention est relative aux supports antivibratoires hydrauliques à commande pneumatique et aux systèmes antivibratoires comportant de tels supports.

Plus particulièrement, l'invention concerne un support antivibratoire hydraulique destiné à être interposé entre deux éléments rigides et comportant :
- des première et deuxième armatures rigides destinées à être fixées aux deux éléments rigides à réunir,
- un corps en élastomère qui relie entre elles les deux armatures et qui délimite partiellement une chambre de travail remplie de liquide, ce corps en élastomère étant adapté pour supporter une charge statique orientée selon un axe central,
- une paroi souple en élastomère formant deux poches adjacentes qui délimitent respectivement une chambre de compensation et une chambre hydraulique supplémentaire remplies de liquide, et reliées à la chambre de travail respectivement par un premier passage étranglé et par un deuxième passage,
- une cloison rigide qui s'étend perpendiculairement à l'axe central et qui est solidaire de la deuxième armature, ladite cloison rigide séparant la chambre de travail d'avec la chambre de compensation et d'avec la chambre hydraulique supplémentaire,
- une coupelle de protection rigide recouvrant la paroi souple et englobant la chambre de compensation et la chambre hydraulique supplémentaire, cette coupelle de protection présentant un fond et une paroi latérale périphérique fixée à la deuxième armature,
- un godet rigide qui présente une paroi latérale annulaire s'étendant selon l'axe central entre un fond fermé et une extrémité ouverte, ledit godet étant appliqué contre la paroi souple en serrant ladite paroi souple avec étanchéité contre la cloison rigide autour de la deuxième poche formée par ladite paroi souple, de façon à séparer la chambre de compensation et la chambre hydraulique supplémentaire, et ledit godet présentant une surface intérieure qui délimite avec ladite deuxième poche une chambre pneumatique communiquant avec un conduit pneumatique.

Le document FR-A-2 782 764 décrit un exemple d'un tel support antivibratoire, qui donne toute satisfaction, notamment vis à vis de l'atténuation des vibrations aux fréquences de ralenti d'un moteur monté sur une caisse de véhicule au moyen du support antivibratoire.

Il peut toutefois s'avérer souhaitable de perfectionner encore les supports antivibratoires de ce type, notamment afin de faciliter les déformations de la première poche de la paroi souple. De plus, la deuxième poche de la paroi souple de ce support connu est elle-même assez rigide et est conçue spécifiquement pour entrer en vibration sous l'effet de pressions et dépressions alternées générées dans la chambre pneumatique, mais il serait souhaitable d'assouplir cette deuxième poche afin qu'elle puisse se déformer librement sous le seul effet des variations de volume de la chambre de travail, notamment lors du fonctionnement du moteur au ralenti si le support antivibratoire supporte un moteur, afin d'éviter d'avoir à commander positivement les déplacements de ladite deuxième poche.

La présente invention a notamment pour but de résoudre ces problèmes techniques.

A cet effet, selon l'invention, un support antivibratoire du genre en question est caractérisé :
- en ce que la chambre hydraulique supplémentaire est voisine de la paroi latérale de la coupelle de protection,
- en ce que la chambre de compensation est juxtaposée à la chambre hydraulique supplémentaire sans entourer ladite chambre hydraulique supplémentaire, ladite chambre de compensation étant en contact avec la cloison rigide sur une première surface supérieure à 4 fois une deuxième surface de ladite cloison rigide en contact avec la chambre hydraulique supplémentaire,
- et en ce que le godet s'étend parallèlement à l'axe central jusqu'au fond de la coupelle de protection, la deuxième poche de la paroi souple s'étendant au repos jusqu'au voisinage du fond dudit godet.

Grâce à ces dispositions :
- la chambre de compensation est aisément déformable compte tenu de sa conformation d'un seul tenant et de son grand volume,
- et la chambre hydraulique supplémentaire est elle-même aisément déformable, le cas échéant sous le seul effet des variations de volume de la chambre de travail, ce qui permet éventuellement d'éviter de commander positivement les déplacements de la deuxième poche souple.

Dans des modes de réalisation préférés de l'invention, on peut éventuellement avoir recours en outre à l'une et/ou à l'autre des dispositions suivantes :
- la cloison rigide comporte une partie centrale dotée d'un clapet de découplage formé par une membrane souple en élastomère qui sépare la chambre de travail et la chambre de compensation et qui est adaptée pour vibrer avec un débattement limité entre ces deux chambres, le deuxième passage étant disposé radialement à l'extérieur dudit clapet de découplage, et la chambre de compensation étant disposée sensiblement en correspondance avec le clapet de découplage ;
- la cloison rigide comporte deux grilles communiquant respectivement avec la chambre de travail et la chambre de compensation pour limiter le débattement du clapet de découplage, l'extrémité libre du godet étant disposée radialement à l'extérieur de la grille qui communique avec la chambre de compensation, en regard d'une partie pleine appartenant à ladite cloison rigide ;
- le deuxième passage est un passage étranglé, lesdits premier et deuxième passages étranglés étant dimensionnés pour présenter respectivement des première et deuxième fréquences de résonance différentes, la première fréquence de résonance étant inférieure à 20 Hz et la deuxième fréquence de résonance étant comprise entre 20 et 80 Hz ;
- la paroi souple en élastomère comporte un bord périphérique qui est serré avec étanchéité entre la paroi latérale de la coupelle de protection et la cloison rigide, l'extrémité ouverte de la paroi latérale du godet étant conformée sensiblement en segment de cercle et présentant d'une part, un tronçon courbe qui longe la paroi latérale de la coupelle de protection et d'autre part, un tronçon sensiblement rectiligne qui sépare la chambre de compensation et la chambre hydraulique supplémentaire ;
- le deuxième passage s'étend sensiblement parallèlement à l'axe central.

Par ailleurs, l'invention a également pour objet un véhicule automobile comportant :
- une caisse supportant un moteur par au moins un support antivibratoire hydraulique tel que défini ci-dessus,
- une vanne à trois voies montée dans le véhicule indépendamment du support antivibratoire et adaptée pour faire communiquer la chambre pneumatique du support antivibratoire, soit avec une source de dépression, soit avec l'atmosphère,
- et un dispositif de commande monté dans le véhicule indépendamment du support antivibratoire et adapté pour actionner la vanne à trois voies de façon à faire communiquer la chambre pneumatique du support antivibratoire avec l'atmosphère lorsque le moteur du véhicule fonctionne à un régime inférieur à une limite prédéterminée, et de façon à faire communiquer la chambre pneumatique du support antivibratoire avec la source de dépression lorsque le moteur du véhicule fonctionne à un régime supérieur à ladite limite prédéterminée.

Cette limite prédéterminée peut correspondre notamment à un régime du moteur qui génère des vibrations de fréquence comprise entre 20 et 100 Hz et au moins égale à ladite deuxième fréquence.

D'autres caractéristiques et avantages de l'invention apparaîtront au cours de la description suivante d'une de ses formes de réalisation, donnée à titre d'exemple non limitatif, en regard des dessins joints. Sur les dessins :
- la figure 1 est une vue schématique d'un véhicule automobile dont le moteur est porté par au moins un support antivibratoire hydraulique selon une forme de réalisation de l'invention,
- la figure 2 est une vue en coupe verticale du support antivibratoire du véhicule de la figure 1, dans un état de fonctionnement correspondant au régime de ralenti du moteur,
- la figure 3 est une vue éclatée en perspective montrant la paroi souple en élastomère qui délimite les deux chambres de compensation du support antivibratoire de la figure 2, et un insert en forme de godet qui englobe l'une de ces chambres,
- et la figure 4 est une vue similaire à la figure 2, montrant le support antivibratoire dans son état correspondant au roulage du véhicule.

Sur les différentes figures, les mêmes références désignent des éléments identiques ou similaires.

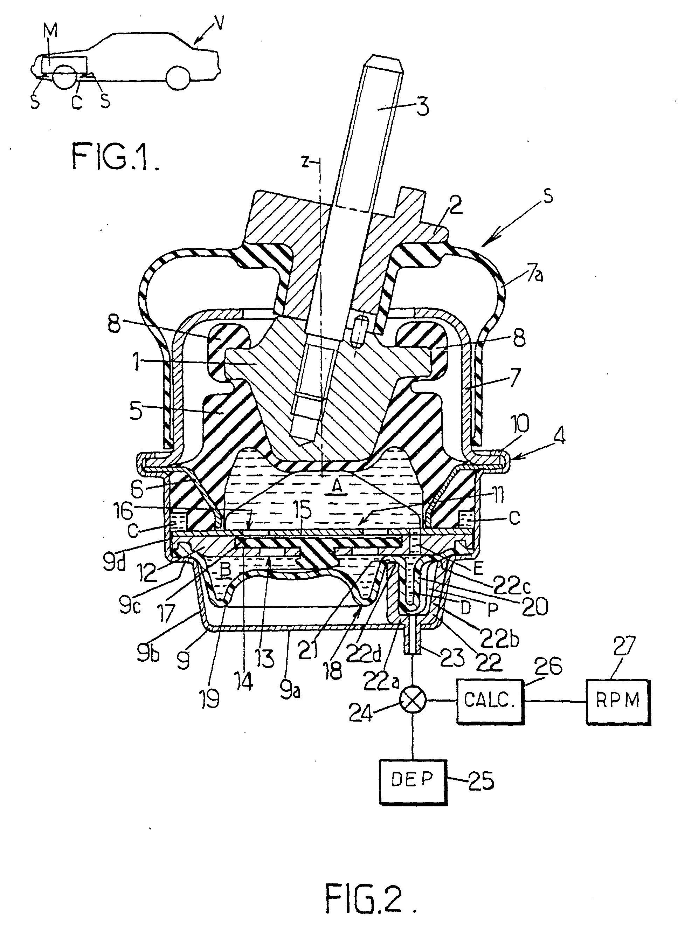

La figure 1 représente un véhicule automobile V dont la caisse C supporte un moteur M au moyen d'au moins un support antivibratoire hydraulique S tel que celui représenté sur la figure 2. Ce support antivibratoire S comporte :
- une première armature rigide 1 présentant la forme d'une embase métallique solidaire d'une pièce métallique intermédiaire 2 et d'un goujon 3 qui est dirigé vers le haut dans une direction proche de l'axe vertical Z et qui est destiné à être fixé par exemple au moteur M du véhicule,
- une deuxième armature 4 qui est destinée à être fixée par exemple à la caisse C du véhicule et qui comporte notamment une couronne métallique 6,
- et un corps en élastomère 5 capable de supporter notamment les efforts statiques dus au poids du moteur M, ce corps en élastomère pouvant présenter par exemple une forme de cloche qui s'étend entre un sommet surmoulé et adhérisé sur l'embase 1 et une base annulaire surmoulée et adhérisée sur la couronne métallique 6.

Dans l'exemple représenté, une cloche métallique rigide 7 dont le pourtour est solidarisé avec la couronne 6, présente une ouverture supérieure traversée par la pièce intermédiaire 2 et le goujon 3. Cette cloche englobant le corps en élastomère 5 ainsi que l'embase 1 de façon à limiter les débattements relatifs entre les première et deuxième armatures 1, 4 par butée d'un bourrelet 8 en élastomère, formé sur le pourtour de l'embase 1, contre la surface intérieure de ladite cloche 7.

De plus, une jupe souple de protection 7a en élastomère est surmoulée et adhérisée sur la pièce intermédiaire 2, et cette jupe est emboîtée autour de la cloche 7.

Par ailleurs, le support S comporte en outre une coupelle de protection inférieure 9, réalisée en tôle. Cette coupelle comportant un fond horizontal 9a qui est prolongé vers le haut par une paroi latérale périphérique comprenant une première portion tronconique 9b, puis un rebord annulaire sensiblement horizontal 9c, puis une portion cylindrique 9d qui se termine par un rabat serti 10 qui englobe les périphéries respectives de la couronne métallique 6 et de la cloche 7 de façon que la coupelle 9, la couronne 6 et la cloche 7 forment ensemble la deuxième armature 4 susmentionnée.

Cette deuxième armature 4 est solidaire d'une cloison rigide 11, qui s'étend perpendiculairement à l'axe Z et qui est serrée entre la base du corps en élastomère 5 et le rebord 9c de la coupelle de protection. Cette cloison comprend une coque évidée 12, réalisée par exemple par moulage en alliage léger et comprenant dans sa partie centrale une grille inférieure 13 au-dessus de laquelle est évidé un logement 14 recouvert par une plaque de tôle 15 dans laquelle est également ménagée une grille ajourée 16 en correspondance avec le logement 14.

Un clapet de découplage 17, qui se présente sous la forme d'une membrane souple en élastomère, est monté dans le logement 14 avec un faible jeu dans la direction de l'axe Z, le jeu du clapet 17 pouvant être par exemple de l'ordre de 0,5 à 1 mm de façon que le clapet 17 puisse vibrer librement parallèlement à l'axe Z.

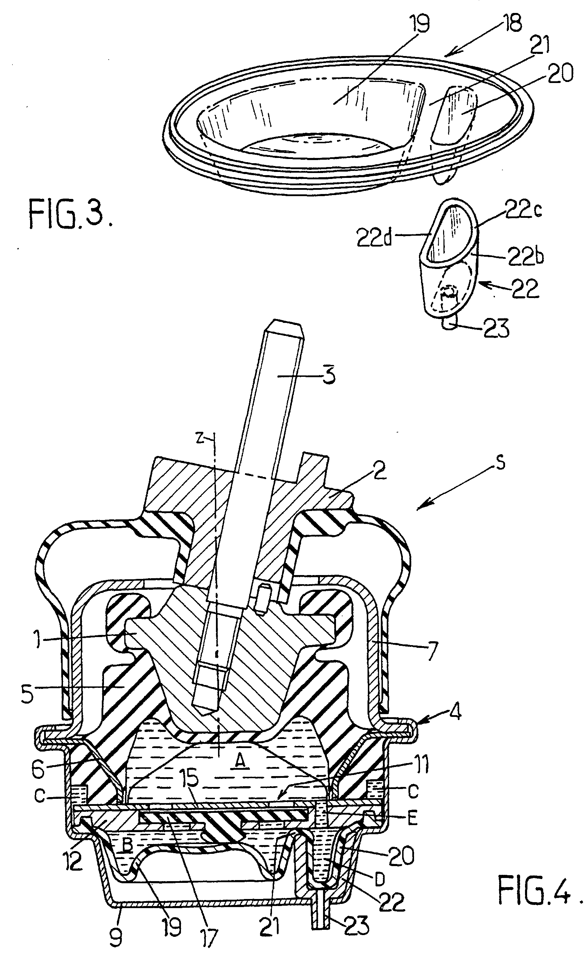

Par ailleurs, le support S comporte une paroi souple en élastomère 18, visible également sur la figure 3 et formant deux poches ou soufflets 19, 20 juxtaposées en regard de la cloison rigide 11, ces poches 19, 20 étant séparées l'une de l'autre par une zone 21 de la paroi souple 18 qui est appliquée avec étanchéité contre une partie pleine de la coque rigide 12 disposée radialement à l'extérieur de la grille 13.

La poche 20 de la paroi souple 18 est entourée par un insert rigide 22 en forme de godet, réalisé par exemple en matière plastique et présentant un fond horizontal 22a disposé contre le fond 9a de la coupelle de protection et prolongé vers le haut par une paroi latérale 22b qui s'étend jusqu'à une extrémité annulaire ouverte 22c, 22d. Cette extrémité ouverte du godet 22 est appliquée contre la face inférieure de la paroi souple 18 autour de la deuxième poche 20, en serrant ladite paroi souple contre des parties pleines de la coque rigide 12 de façon à créer une séparation étanche entre les volumes intérieurs des poches 19, 20.

Avantageusement, le godet 22 est placé contre la partie tronconique 9b de la paroi latérale de la coupelle de protection 9, et l'extrémité annulaire ouverte du godet présente :
- d'une part, un tronçon courbe 22c qui peut être par exemple en forme d'arc de cercle et qui longe ladite partie tronconique 9b de la coupelle 9,
- et d'autre part, un tronçon rectiligne 22d qui est disposé en regard de la zone de séparation 21 de la paroi souple 18.

Le support antivibratoire délimite ainsi trois chambres hydrauliques remplies de liquide, savoir :
- une chambre de travail A délimitée entre la surface intérieure du corps en élastomère 5 et la plaque de tôle 15 de la cloison rigide 11,
- une première chambre de compensation B délimitée entre la face inférieure de la coque rigide 12 et la poche souple 19, cette première chambre de compensation B communiquant avec la chambre de travail A au moyen d'un passage étranglé C qui, dans l'exemple représenté, est ménagé dans la base du corps en élastomère 5 et dans la cloison rigide 11, ce passage étranglé C étant dimensionné pour présenter une fréquence de résonance inférieure à 20 Hz et généralement voisine de 10 Hz,
- et une deuxième chambre de compensation D, qui est délimitée entre la face inférieure de la coque rigide 12 et la deuxième poche 20 de la paroi souple en élastomère, cette deuxième chambre de compensation étant en contact avec la face inférieure de la cloison 11 sur une surface par exemple 4 à 8 fois plus petite que la surface de contact entre la chambre B et la face inférieure de la cloison 11, et ladite chambre D communiquant avec la chambre de travail A par l'intermédiaire d'un passage étranglé E percé parallèlement à l'axe Z dans la cloison rigide 11 et dimensionné pour présenter une fréquence de résonance comprise avantageusement entre 20 et 80 Hz, correspondant à la fréquence des vibrations générées par le moteur M lorsqu'il fonctionne en régime de ralenti.

Par ailleurs, la face supérieure du clapet 17 communique avec la chambre de travail A tandis que la chambre de compensation B communique avec la face inférieure dudit clapet, lequel clapet forme une barrière étanche entre les deux chambres, notamment lorsqu'il est en position de butée contre l'une des grilles 13, 16.

La conformation d'un seul tenant de la chambre de compensation B permet à la poche souple 19 qui délimite cette chambre de se déformer aisément pour absorber les variations de volume de la chambre de travail A.

Il en va de même pour la chambre de compensation D, qui s'étend avantageusement sur toute la hauteur du godet 22 et présente ainsi un volume relativement important.

Enfin, le godet 22 délimite avec la surface extérieure de la poche souple 20, une chambre pneumatique P qui communique avec un raccord 23 ménagé dans le fond 22a du godet et traversant le fond 9a de la coupelle de protection. Ce raccord 23 communique lui-même, par l'intermédiaire d'un conduit, avec une vanne à trois voies 24 qui est adaptée pour faire communiquer la chambre pneumatique P soit avec une source de dépression 25 (DEP.) constituée par exemple par un circuit de vide utilisé pour l'assistance de freinage du véhicule, soit avec l'atmosphère.

La vanne à trois voies 24 peut être constituée avantageusement par une électrovanne commandée par un circuit électronique de commande 26 (CALC.) tel que le calculateur de bord du véhicule, lui-même raccordé à un capteur 27 (RPM) donnant le régime du moteur.

La vanne 24 et le calculateur 26 sont montés dans le véhicule indépendamment du support S, de sorte que ce support peut présenter des dimensions relativement faibles et est facile à intégrer dans le véhicule V.

Ainsi, lorsque le moteur du véhicule fonctionne au ralenti, c'est-à-dire lorsque le capteur 27 indique un régime inférieur à une limite prédéterminée correspondant par exemple à une fréquence de vibrations comprise entre 20 et 100 Hz, le circuit de commande 26 actionne la vanne 24 pour qu'elle fasse communiquer la chambre pneumatique P avec l'atmosphère, comme représenté sur la figure 2.

Dans ce mode de fonctionnement, les vibrations du moteur M sont transmises à la chambre de travail A par le corps en élastomère 5, ce qui provoque des fluctuations de volume de ladite chambre de travail qui sont absorbées :
- pour une faible partie par le clapet de découplage 17 oscillant entre les deux grilles 13, 16,
- et pour une large partie par les déformations de la chambre de compensation D : compte tenu de la fréquence de résonance du passage étranglé E qui correspond sensiblement à la fréquence des vibrations émises par le moteur au ralenti, ledit passage étranglé E est alors le siège de phénomènes de résonance qui permettent d'amortir efficacement les vibrations du moteur.

En revanche, pendant le roulage du véhicule, c'est-à-dire pour un régime moteur supérieur à ladite limite prédéterminée, le circuit de commande 26 actionne la vanne 24 de façon que la chambre pneumatique P communique avec la source de dépression 25, de sorte que la poche souple 20 est alors maintenue appliquée contre la surface intérieure du godet 22 comme représenté sur la figure 4.

Dans ce mode de fonctionnement, tout se passe comme si la chambre de compensation D n'existait plus, et le support antivibratoire fonctionne de façon classique :
- d'une part, en filtrant les vibrations de faible amplitude (par exemple inférieure à 0,5 ou 1 mm) et de relativement grande fréquence (par exemple, supérieure à 20 Hz), au moyen du clapet 17,
- et d'autre part, en amortissant les vibrations de faible fréquence (par exemple inférieure à 20 Hz) et de grande amplitude (par exemple, supérieure à 1 mm) par les transferts de liquide entre la chambre de travail A et la chambre de compensation B à travers le passage étranglé C.

## Revendications

1. Support antivibratoire hydraulique destiné à être interposé entre deux éléments rigides (M, C) et comportant :
- des première et deuxième armatures (1, 4) rigides destinées à être fixées aux deux éléments rigides à réunir,
- un corps en élastomère (5) qui relie entre elles les deux armatures (1, 4) et qui délimite partiellement une chambre de travail (A) remplie de liquide, ce corps en élastomère étant adapté pour supporter une charge statique orientée selon un axe central (Z),
- une paroi souple en élastomère (18) formant deux poches adjacentes (19, 20) qui délimitent respectivement une chambre de compensation (B) et une chambre hydraulique supplémentaire (D) remplies de liquide et reliées à la chambre de travail (A) respectivement par un premier passage étranglé (C) et par un deuxième passage (E),
- une cloison rigide (11) qui s'étend perpendiculairement à l'axe central (Z) et qui est solidaire de la deuxième armature (4), ladite cloison rigide séparant la chambre de travail (A) d'avec la chambre de compensation et d'avec la chambre hydraulique supplémentaire (D),
- une coupelle de protection rigide (9) recouvrant la paroi souple (18) et englobant la chambre de compensation (B) et la chambre hydraulique supplémentaire (D), cette coupelle de protection présentant un fond (9a) et une paroi latérale périphérique (9b, 9c, 9d) fixée à la deuxième armature (4),
- un godet rigide (22) qui présente une paroi latérale annulaire (22b) s'étendant selon l'axe central (Z) entre un fond (22a) fermé et une extrémité ouverte (22c, 22d), ledit godet étant appliqué contre la paroi souple (18) en serrant ladite paroi souple avec étanchéité contre la cloison rigide (11) autour de la deuxième poche (20) formée par ladite paroi souple, de façon à séparer la chambre de compensation (B) et la chambre hydraulique supplémentaire (D), et ledit godet présentant une surface intérieure qui délimite avec ladite deuxième poche une chambre pneumatique (P) communiquant avec un conduit pneumatique (23),
**caractérisé en ce que** la chambre hydraulique supplémentaire (D) est adjacente à la paroi latérale (9b-9d) de la coupelle de protection,
**en ce que** la chambre de compensation (B) est juxtaposée à la chambre hydraulique supplémentaire (D) sans entourer ladite chambre hydraulique supplémentaire, ladite chambre de compensation étant en contact avec la cloison rigide (11) sur une première surface supérieure à 4 fois une deuxième surface de ladite cloison rigide en contact avec la chambre hydraulique supplémentaire (D),
et **en ce que** le godet (22) s'étend parallèlement à l'axe central (Z) jusqu'au fond (9a) de la coupelle de protection, la deuxième poche (20) de la paroi souple s'étendant au repos jusqu'au voisinage du fond dudit godet.

2. Support antivibratoire selon la revendication 1, dans lequel la cloison rigide (11) comporte une partie centrale dotée d'un clapet de découplage (17) formé par une membrane souple en élastomère qui sépare la chambre de travail (A) et la chambre de compensation (B) et qui est adaptée pour vibrer avec un débattement limité entre ces deux chambres, le deuxième passage (E) étant disposé radialement à l'extérieur dudit clapet de découplage (17), et la chambre de compensation (B) étant disposée sensiblement en correspondance avec le clapet de découplage (17).

3. Support antivibratoire selon la revendication 2, dans lequel la cloison rigide (11) comporte deux grilles (13, 16) communiquant respectivement avec la chambre de travail (A) et la chambre de compensation (B) pour limiter le débattement du clapet de découplage (17), l'extrémité libre (22c, 22d) du godet étant disposée radialement à l'extérieur de la grille (13) qui communique avec la chambre de compensation (B), en regard d'une partie pleine appartenant à ladite cloison rigide.

4. Support antivibratoire selon l'une quelconque des revendications précédentes, dans lequel le deuxième passage (E) est un passage étranglé, lesdits premier et deuxième passages étranglés étant dimensionnés pour présenter respectivement des première et deuxième fréquences de résonance différentes, la première fréquence de résonance étant inférieure à 20 Hz et la deuxième fréquence de résonance étant comprise entre 20 et 80 Hz.

5. Support antivibratoire selon l'une quelconque des revendications précédentes, dans lequel la paroi souple en élastomère (18) comporte un bord périphérique qui est serré avec étanchéité entre la paroi latérale (9a-9d) de la coupelle de protection et la cloison rigide (11), l'extrémité ouverte de la paroi latérale du godet étant conformée sensiblement en segment de cercle et présentant d'une part, un tronçon courbe (22c) qui longe la paroi latérale (9b-9d) de la coupelle de protection et d'autre part, un tronçon sensiblement rectiligne (22d) qui sépare la chambre de compensation (B) et la chambre hydraulique supplémentaire (D).

6. Support antivibratoire selon l'une quelconque des revendications précédentes, dans lequel le deuxième passage (E) s'étend sensiblement parallèlement à l'axe central (Z).

7. Véhicule automobile comportant :
- une caisse (C) supportant un moteur (M) par au moins un support antivibratoire hydraulique (S) selon l'une quelconque des revendications précédentes,
- une vanne à trois voies (24) montée dans le véhicule (V) indépendamment du support antivibratoire (S) et adaptée pour faire communiquer la chambre pneumatique (P) du support antivibratoire, soit avec une source de dépression (25), soit avec l'atmosphère,
- et un dispositif de commande (26) monté dans le véhicule (V) indépendamment du support antivibratoire (S) et adapté pour actionner la vanne à trois voies (24) de façon à faire communiquer la chambre pneumatique (P) du support antivibratoire avec l'atmosphère lorsque le moteur (M) du véhicule fonctionne à un régime inférieur à une limite prédéterminée, et de façon à faire communiquer la chambre pneumatique du support antivibratoire avec la source de dépression lorsque le moteur du véhicule fonctionne à un régime supérieur à ladite limite prédéterminée.

8. Véhicule selon la revendication 7, dans lequel ladite limite prédéterminée correspond à un régime du moteur qui génère des vibrations de fréquence comprise entre 20 et 100 Hz et au moins égale à ladite deuxième fréquence.

## Patentansprüche

1. Hydraulisches schwingungsdämpfendes Lager, das dazu vorgesehen ist, zwischen zwei starren Elementen (M, C) angeordnet zu werden, bestehend aus:
- einer ersten und einer zweiten starren Halterung (1, 4), die dazu vorgesehen sind, an den beiden zu verbindenden starren Elementen befestigt zu werden,
- einem Elastomerkörper (5), der die beiden starren Halterungen (1, 4) miteinander verbindet und eine mit Flüssigkeit gefüllte Arbeitskammer (A) teilweise umgrenzt, wobei dieser Elastomerkörper geeignet ist, eine statische Last zu tragen, die gemäß einer zentralen Achse (Z) ausgerichtet ist,
- einer biegsamen Elastomerwand (18), die zwei aneinandergrenzende Taschen (19, 20) bildet, die eine Ausgleichskammer (B) bzw. eine zusätzliche Hydraulikkammer (D) umgrenzen, welche mit Flüssigkeit gefüllt sind und mit der Arbeitskammer (A) durch einen ersten engen Durchlass (C) bzw. einen zweiten Durchlass (E) verbunden sind,
- einer starren Schutzschale (9), die die biegsame Wand (18) ummantelt und die Ausgleichskammer (B) und die zusätzliche Hydraulikkammer (D) umschließt, wobei diese Schutzschale einen Boden (9a) und eine umlaufende Seitenwand (9b, 9c, 9d) aufweist, die an der zweiten Halterung (4) befestigt ist,
- einem starren Behälter (22) mit einer ringförmigen Seitenwand (22b), die sich auf einer zentralen Achse (Z) zwischen einem geschlossenen Boden (22a) und einem offenen Ende (22c, 22d) erstreckt, wobei dieser Behälter an die biegsame Wand (18) angedrückt wird, wobei diese biegsame Wand um die von dieser biegsamen Wand gebildete zweite Tasche (20) herum mit Dichtigkeit gegen die starre Trennwand (11) gedrückt wird, so dass die Ausgleichskammer (B) und die zusätzliche Hydraulikkammer (D) getrennt sind, und wobei dieser Behälter eine Innenfläche aufweist, die mit dieser zweiten Tasche eine Luftdruckkammer (P) umgrenzt, die mit einer Luftdruckleitung (23) kommuniziert,
**dadurch gekennzeichnet,**
**dass** die zusätzliche Hydraunkkammer (D) an die Seitenwand (9b - 9d) der Schutzschale angrenzt,
**dass** die Ausgleichskammer (B) neben der zusätzlichen Hydraulikkammer (D) liegt, ohne diese zusätzliche Hydraulikkammer zu umgeben, wobei diese Ausgleichskammer sich in Kontakt mit der starren Trennwand (11) befindet, und zwar über eine erste Fläche, die größer ist als das Vierfache einer zweiten, in Kontakt mit der zusätzlichen Hydraulikkammer (D) befindlichen Fläche dieser starren Trennwand, und
**dass** der Behälter (22) sich parallel zur zentralen Achse (Z) bis zum Boden (9a) der Schutzschale erstreckt, wobei die zweite Tasche (20) der biegsamen Wand sich in Ruhestellung bis in den Bereich des Bodens dieses Behälters erstreckt.

2. Schwingungsdämpfendes Lager nach Anspruch 1, bei dem die starre Trennwand (11) einen zentralen Teil aufweist, der mit einer Entkopplungsklappe (17) versehen ist, die aus einer biegsamen Elastomermembran besteht, die die Arbeitskammer (A) von der Ausgleichskammeer (B) trennt und geeignet ist, zwischen diesen beiden Kammern mit einem begrenzten Aasschlag zu schwingen, wobei der zweite Durchlass (E) in radialer Richtung außerhalb dieser Entkopplungsklappe (17) angeordnet ist, und wobei die Ausgleichskammer (B) im wesentlichen im Bereich der Entkopplungsklappe (17) angeordnet ist.

3. Schwingungsdämpfendes Lager nach Anspruch 2, bei dem die starre Trennwand (11) zwei Gitter (13, 16) aufweist, die mit der Arbeitskammer (A) bzw. mit der Ausgleichskammer (B) kommunizieren, um den Ausschlag der Entkopplungsklappe (17) begrenzen, wobei das freie Ende (22c, 22d) des Behälters in radialer Richtung außerhalb des Gitters (13), das mit der Ausgleichskammer (B) kommuniziert, gegenüber einem vollen Bereich angeordnet ist, der zu dieser starren Trennwand gehört.

4. Schwingungsdämpfendes Lager nach einem der vorherigen Ansprüche, bei dem der zweite Durchlass (E) ein verengter Durchlass ist, wobei dieser erste und dieser zweite enge Durchlass so bemessen sind, dass sie unterschiedliche erste bzw. zweite Resonanzfrequenzen aufweisen, wobei die erste Resonanzfrequenz unter 20 Hz liegt und die zweite Resonanzfrequenz zwischen 20 und 80 Hz beträgt.

5. Schwingungsdämpfendes Lager nach einem der vorherigen Ansprüche, bei dem die biegsame Elastomerwand (18) einen Außenumfangsrand aufweist, der mit Dichtigkeit zwischen der Seitenwand (9b - 9d) der Schutzschale und der starren Trennwand (11) eingeklemmt ist, wobei das offene Ende der Seitenwand des Behälters im wesentlichen als Kreisbogenaussclmitt geformt ist und einerseits einen gebogenen Abschnitt (22c), der längs der Seitenwand (9b - 9d) der Schutzschale verläuft, und andererseits einen im wesentlichen geradliniges Abschnitt (22d), der die Ausgleichskammer (B) und die zusätzliche Hydraulikkammer (D) von einander trennt, aufweist.

6. Schwingungsdämpfendes Lager nach einem der vorherigen Ansprüche, bei dem sich der zweite Durchlass (E) parallel zur zentralen Achse (Z) erstreckt.

7. Kraftfahrzeug mit:
- einer Karosserie (C), die einen Motor (M) über mindestens ein schwingungsdämpfendes Lager (S) nach einem der vorherigen Ansprüche trägt,
- einem Drei-Wege-Ventil (24), das in dem Fahrzeug (V) unabhängig von dem schwingungsdämpfenden Lager (S) angebracht ist und geeiget ist, die Luftdruckkammer (P) des schwingungsdämpfenden Lagers entweder mit einer Unterdruckquelle (25) oder mit der Außenatmosphäre in Verbindung zu setzen, und
- einer Steuervorrichtung (26), die in dem Fahrzeug (V) unabhängig von dem schwingungsdämpfenden Lager (S) angebracht ist und geeignet ist, das Drei-Wege-Ventil (24) dergestalt zu betätigen, dass die Luftdruckkammer (P) des schwingungsdämpfenden Lagers mit der Außenatmosphäre in Verbindung gesetzt wird, wenn der Motor (M) des Fahrzeugs mit einer Drehzahl läuft, die unter einem vorbestimmten Grenzwert liegt, und dass die Luftdruckkammer (P) des schwingungsdämpfenden Lagers mit der Unterdruckquelle in Verbindung gesetzt wird, wenn der Motor (M) des Fahrzeugs mit einer Drehzahl läuft, die über diesem Grenzwert liegt.

8. Kraftfahrzeug nach Anspruch 7, bei dem dieser vorbestimmte Grenzwert einer Drehzahl des Motors entspricht, die Schwingungen erzeugt, deren Frequenz zwischen 20 und 100 Hz liegt und mindestens gleich der genannten zweiten Frequenz ist.

## Claims

1. A hydraulic antivibration support for interposing between two rigid elements (M, C) and comprising:
· first and second rigid strength members (1, 4) for fixing to the two rigid elements that are to be united;
· an elastomer body (5) interconnecting the two strength members (1, 4) and defining part of a liquid-filled working chamber (A), said elastomer body being adapted to support a static load directed along a central axis (Z);
· a flexible elastomer wall (18) forming two adjacent bags (19, 20) which define respectively a compensation chamber (B) and an additional hydraulic chamber (D), both filled with liquid and connected to the working chamber (A) respectively via a constricted first passage (C) and via a second passage (E);
· a rigid partition (11) extending perpendicularly to the central axis (Z) and secured to the second strength member (4), said rigid partition separating the working chamber (A) from the compensation chamber and from the additional hydraulic chamber (D);
· a rigid protective cup (9) covering the flexible wall (18) and encompassing both the compensation chamber (B) and the additional hydraulic chamber (D), said protective cup having an end wall (9a) and a peripheral side wall (9b, 9c, 9d) fixed to the second strength member (4); and
· a rigid thimble (22) which has an annular side wall (22b) extending in the direction of the central axis (Z) between a closed end wall (22a) and an open end (22c, 22d), said thimble being pressed against the flexible wall (18) and clamping said flexible wall in leakproof manner against the rigid partition (11) around the second bag (20) formed in said flexible wall so as to separate the compensation chamber (B) from the additional hydraulic chamber (D), and said thimble presenting an inside surface which co-operates with said second bag to define a pneumatic chamber (P) communicating with a pneumatic duct (23);
the support being **characterized in that** the additional hydraulic chamber (D) is adjacent to the side wall (9b-9d) of the protective cup;
**in that** the compensation chamber (B) is juxtaposed to said additional hydraulic chamber (D) without surrounding said additional hydraulic chamber, said compensation chamber being in contact with the rigid partition (11) via a first surface area that is more than four times greater than a second surface area of said rigid partition which is in contact with the additional hydraulic chamber (D); and
**in that** the thimble (22) extends parallel to the central axis (Z) to the end wall (9a) of the protective cup, the second bag (20) of the flexible wall extending at rest to the vicinity of the end wall of said thimble.

2. An antivibration support according to claim 1, in which the rigid partition (11) has a central portion provided with a decoupling valve member (17) formed by a flexible elastomer membrane which separates the working chamber (A) from the compensation chamber (B) and which is adapted to vibrate within limited clearance between these two chambers, the second passage (E) being disposed radially outside said decoupling valve member (17), and the compensation chamber (B) being disposed substantially to correspond with the decoupling valve member (17).

3. An antivibration support according to claim 2, in which the rigid partition (11) has two grids (13, 16) communicating respectively with the working chamber (A) and with the compensation chamber (B) to limit the clearance for the decoupling valve member (17), the free end (22c, 22d) of the thimble being placed radially outside the grid (13) which communicates with the compensation chamber (B), placing a solid portion of said rigid partition.

4. An antivibration support according to any preceding claim, in which the second passage (E) is a constricted passage, said first and second throttle passages being dimensioned to present different first and second resonant frequencies respectively, the first resonant frequency being less than 20 Hz and the second resonant frequency lying in the range 20 Hz to 80 Hz.

5. An antivibration support according to any preceding claim, in which the flexible elastomer wall (18) has a peripheral edge which is clamped in leakproof manner between the side wall (9a-9d) of the protective cup and the rigid partition (11), the open end of the side wall of the thimble being shaped substantially as a segment of a circle and presenting firstly a curved portion (22c) running along the side wall (9b-9d) of the protective cup, and secondly a substantially rectilinear portion (22d) between the compensation chamber (B) and the additional hydraulic chamber (D).

6. An antivibration support according to any preceding claim, in which the second passage (E) extends substantially parallel to the central axis (Z).

7. A motor vehicle including:
· bodywork (C) supporting an engine (M) via at least one hydraulic antivibration support (S) according to any preceding claim;
· a three-port valve (24) mounted in the vehicle (V) independently of the antivibration support (S) and adapted to make the pneumatic chamber (P) of the antivibration support communicate either with the atmosphere or with a source of suction (25); and
· a control device (26) mounted in the vehicle (V) independently of the antivibration support (S) and adapted to actuate the three-port valve (24) so as to make the pneumatic chamber (P) of the antivibration support communicate with the atmosphere when the engine (M) of the vehicle is operating at a speed below a predetermined limit, and so as to make the pneumatic chamber of the antivibration support communicate with the source of suction when the vehicle engine is operating at a speed greater than said predetermined limit.

8. A vehicle according to claim 7, in which said predetermined limit corresponds to an engine speed that generates vibration at a frequency that lies in the range 20 Hz to 100 Hz, and that is not less than said resonant second frequency.
